# FASCICULE DE BREVET EUROPEEN

(11) **EP 0 299 398 B1**
(45) Date de publication et mention de la délivrance du brevet: **09.06.1993**
(21) Numéro de dépôt: 88111016.7
(22) Date de dépôt: 11.07.1988
(51) Int. Cl.: B60C 23/00, B60C 23/12, F04B 45/08

(54) **Gonflage et dégonflage d'un pneumatique en rotation**
Luftzufuhr und -abfuhr eines rotierenden Reifens
Inflation and deflation of a rotating tyre

(30) Priorité: 15.07.1987 FR 8710100
(43) Date de publication de la demande: 18.01.1989
(73) Titulaire: COMPAGNIE GENERALE DES ETABLISSEMENTS MICHELIN-MICHELIN & CIE, F-63000 Clermont-Ferrand (FR)
(72) Inventeur: Dosjoub, André, F-63400 Chamalières (FR); Lescoffit, Claude, F-63400 Chamalières (FR)
(74) Mandataire: Bauvir, Jacques

(56) Documents cités:
- DE-C- 98 536
- FR-A- 943 377
- FR-A- 1 025 178
- FR-A- 1 129 903
- FR-A- 2 491 866
- GB-A- 694 476
- GB-A- 1 017 074

## Description

La présente invention se rapporte à un dispositif destiné à être monté sur la roue d'un véhicule, capable d'assurer le gonflage du pneumatique, ainsi que le dégonflage, lorsque la roue tourne.

La pression de gonflage des pneumatiques est un paramètre très important pour le bon fonctionnement de ceux-ci. Il importe de maintenir cette pression à la valeur nominale requise. Dans certains cas, il est même souhaitable de pouvoir modifier ladite pression en fonction des conditions d'utilisation du véhicule. On a donc développé des systèmes capables d'assurer le gonflage des pneumatiques au cours même de l'utilisation de ceux-ci. On connait les systèmes comportant un joint tournant, transmettant la pression depuis l'espace fixe, c'est-à-dire le véhicule proprement dit, vers l'espace mobile en rotation, c'est-à-dire la roue. On connait aussi les systèmes cherchant à utiliser la déformation du pneumatique pour pomper de l'air, comme par exemple celui du brevet FR-A-943 377. Si ces derniers s'affranchissent de l'utilisation d'un joint tournant, leur réalisation est tellement problématique qu'il semble ne jamais y avoir eu de développement à l'échelle industrielle. Par le brevet GB-A-1 017 074, correspondant au préambule de la revendication 1, on connaît un système qui transfert en permanence de l'air d'un réservoir auxiliaire vers le pneumatique, sans pouvoir agir à la demande sur la pression de gonflage de celui-ci.

L'objectif de la présente invention est de procurer un dispositif simple, capable d'assurer à la demande le gonflage d'un pneumatique lorsque celui-ci roule, et qui ne requiert pas de joint tournant.

L'invention a également pour but second de permettre la dégonflage du pneumatique lorsque celui-ci tourne.

Le dispositif selon l'invention, pour le gonflage d'un pneumatique en rotation, comportant un tuyau souple disposé au moins en partie sensiblement circulairement et coaxialement au pneumatique, solidaire en rotation dudit pneumatique et comportant au moins deux orifices, l'un des orifices étant raccordé au volume interne du pneumatique via un clapet anti-retour, ledit dispositif comportant des moyens capables d'assurer localement la striction dudit tuyau souple pour provoquer le gonflage, lesdits moyens étant immobiles en rotation est caractérisé en ce que l'autre des orifices est en communication avec la pression atmosphérique et en ce que lesdits moyens capables d'assurer la striction sont susceptibles de prendre deux positions : une position de repos et une position active dans laquelle ils entrent en contact avec ledit tuyau pour en provoquer la striction.

Les figures suivantes permettent de bien comprendre le fonctionnement de ce dispositif et d'en saisir tous les avantages.

La figure 1 est une coupe montrant schématiquement la disposition générale du dispositif de gonflage.

La figure 2 illustre un détail du dispositif de gonflage et du dispositif de dégonflage, en position de repos.

La figure 3 illustre le même détail, en position de gonflage.

La figure 4 illustre le même détail, en position de dégonflage.

Les figures 5 et 6 illustrent, en coupe, la commande du dégonflage.

La figure 7 illustre une variante de réalisation du dispositif de gonflage.

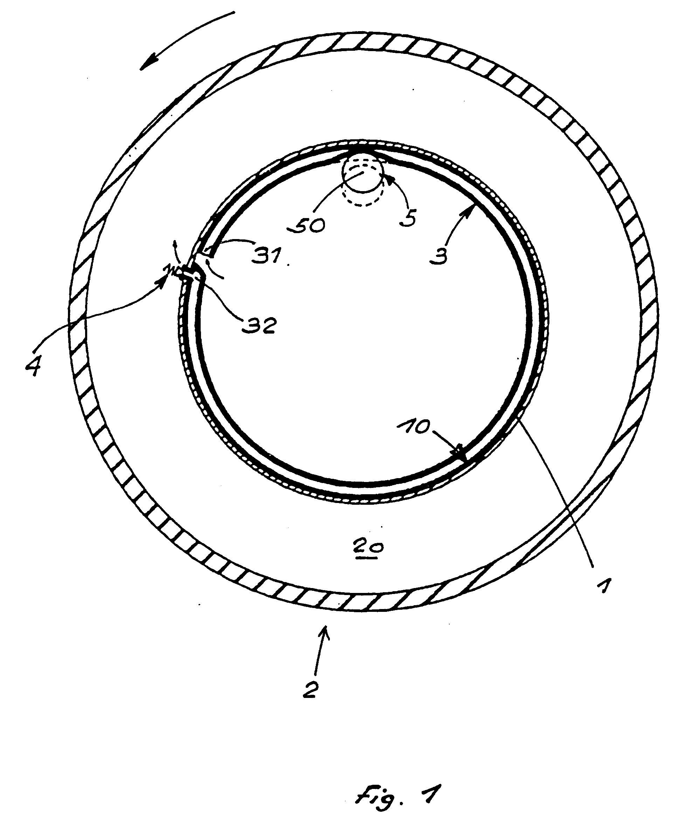

A la figure 1, on a représenté schématiquement une jante portant un pneumatique 2. Le volume intérieur du pneumatique est désigné par la référence 20. On comprime l'air nécessaire au gonflage du pneumatique 2 en écrasant localement un tuyau souple 3 et en déplaçant la striction ainsi réalisée depuis l'orifice 31 en communication avec la pression atmosphérique vers l'orifice 32 opposé, raccordé au volume interne 20 du pneumatique 2. Le tuyau souple 3 est solidaire en rotation du pneumatique 2. Pour assurer très simplement la striction nécessaire, le tuyau souple 3 est disposé au moins en partie en cercle concentrique au pneumatique et est fixé par exemple par collage sur la face radialement intérieure 10 de la jante 1. Ladite striction est provoquée par l'action d'un presseur immobile en rotation par rapport à l'espace fixe, et mécaniquement solidaire du porte-roue (non représenté). Le tuyau souple est bien sûr, orienté de telle sorte que, au cours de la rotation du pneumatique 2 et sous l'action du presseur fixe (par rapport à la rotation du pneumatique 2), l'air soit refoulé depuis l'orifice 31 formant prise d'air vers l'orifice 32. Entre l'orifice 32 et le volume interne 20, on dispose un clapet anti-retour 4. Rien n'empêche de disposer l'orifice 31 formant prise d'air à n'importe quel endroit souhaitable, notamment pour le mettre à l'abri de salissures et de projections d'eau. La partie du tuyau utile pour assurer le pompage est donc celle qui est disposée sensiblement circulairement. De préférence, le clapet anti-retour 4 est disposé le plus près possible de la fin de la zone du tuyau souple 3 qui est écrasée par le presseur.

Les moyens capables d'assurer la striction sont ici constitués par un galet 5 qui est maintenu écarté du tuyau souple 3 lorsque le dispositif est au repos et qui écrase le tuyau souple 3 contre la jante 1 lorsque l'on souhaite provoquer le gonflage. Le galet 5 est rotatif autour de son axe 50, lequel est immobile en rotation par rapport au porte-roue. On commande très simplement le fonctionnement du dispositif en agissant sur la position radiale du galet 5. Par exemple, la position de repos (galet 5 écarté de la jante) est la position naturelle du galet 5 et la position active (tuyau 3 écrasé) est obtenue sous l'action d'un électro-aimant, d'un fluide, ou de tout moyen approprié.

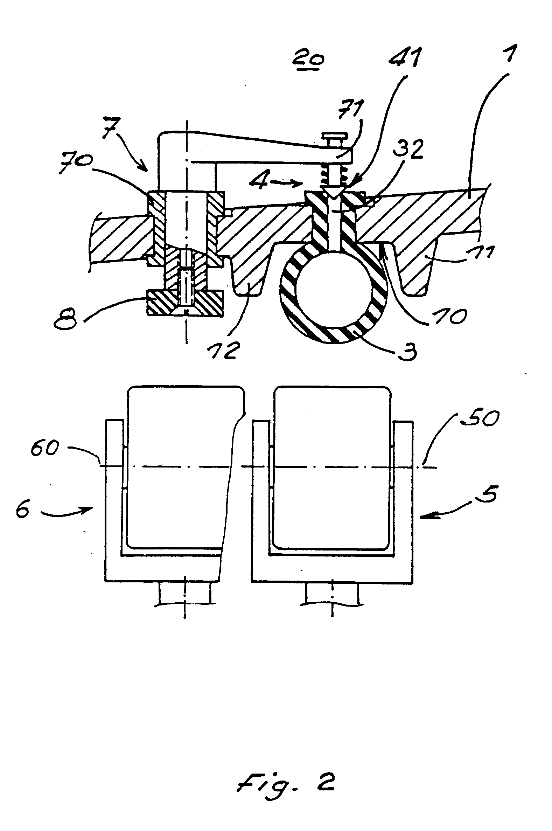

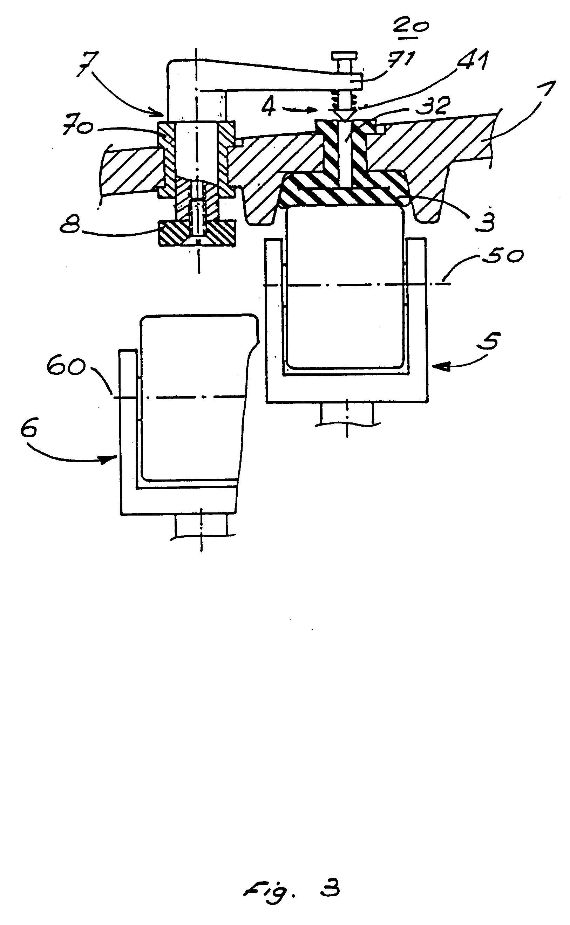

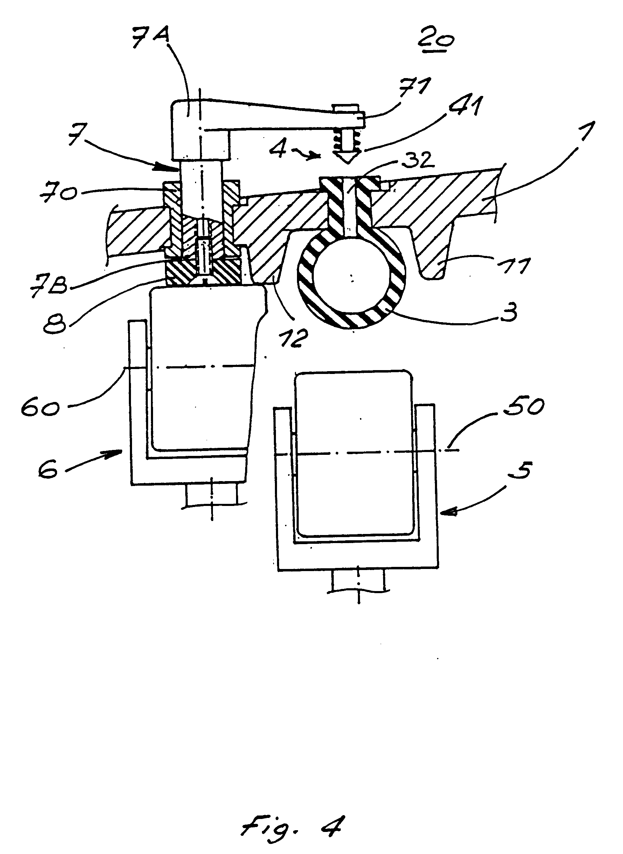

Sur les dessins, on voit le galet 5 en position active à la figure 1 en traits pleins et à la figure 3. On le voit en position de repos aux figures 2 et 4 et, en traits interrompus, à la figure 1. Pour assurer l'efficacité maximale du dispositif, le galet 5 écrase suffisamment le tuyau souple 3 pour annuler la section interne sous son passage.

La section du tuyau souple 3 est calculée en fonction de la rapidité souhaitée pour le gonflage du pneumatique 2. Au besoin, on peut disposer plusieurs tuyaux souples en parallèle, ou bien même on peut disposer le tuyau en spirale pour assurer la compression de l'air sur plus d'un tour, grâce à un galet motorisé axialement de manière coordonnée, ou guidé le long du tuyau souple 3. Par exemple, des protubérances 11, 12 sont disposées sur la jante 1 (fig. 2) de manière à pouvoir guider axialement le galet 5 lorsque celui-ci écrase le tuyau souple 3.

On peut également disposer le tuyau 3 sur moins d'un tour, donc sur un arc de cercle seulement. Dans ce cas, on peut disposer dans le même plan plusieurs tuyaux en arc de cercle, avec chaque fois un clapet anti-retour 4.

L'utilisation d'un dispositif de gonflage selon l'invention trouve tout son intérêt lorsqu'il est associé à un système assurant le contrôle permanent de la pression du pneumatique. En fonction de la valeur de la pression observée, on agit sur le galet 5 par exemple par une impulsion électrique tant que la pression est insuffisante. Le grand intérêt de ce dispositif est de pouvoir compenser ainsi en permanence les pertes naturelles de pression, et ceci sans que le conducteur ait à s'en préoccuper. La commande du gonflage se faisant uniquement dans l'espace fixe, elle est donc très simple à réaliser.

Parce qu'il apporte une solution simple et fiable au problème du gonflage en marche des pneumatiques, le dispositif selon l'invention permet également d'envisager de provoquer le dégonflage du pneumatique pour, à la demande, offrir le meilleur compromis de pression de gonflage du pneumatique en fonction de l'utilisation du moment. En associant le dispositif à un système de contrôle permanent de la pression et à un système de dégonflage, on peut ainsi réaliser une roue dont la pression de gonflage du pneumatique devient un paramètre sur lequel on peut agir en permanence.

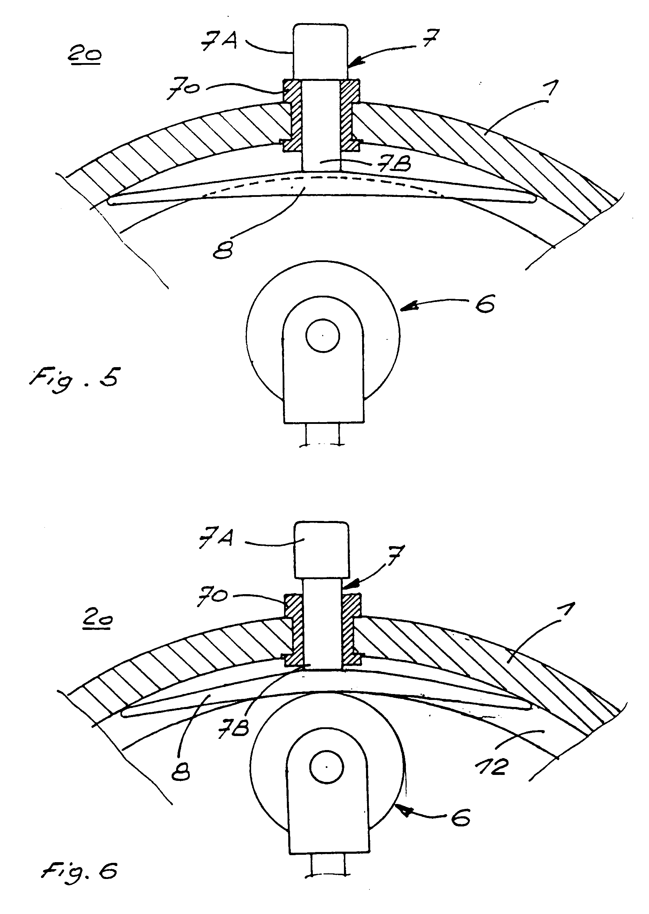

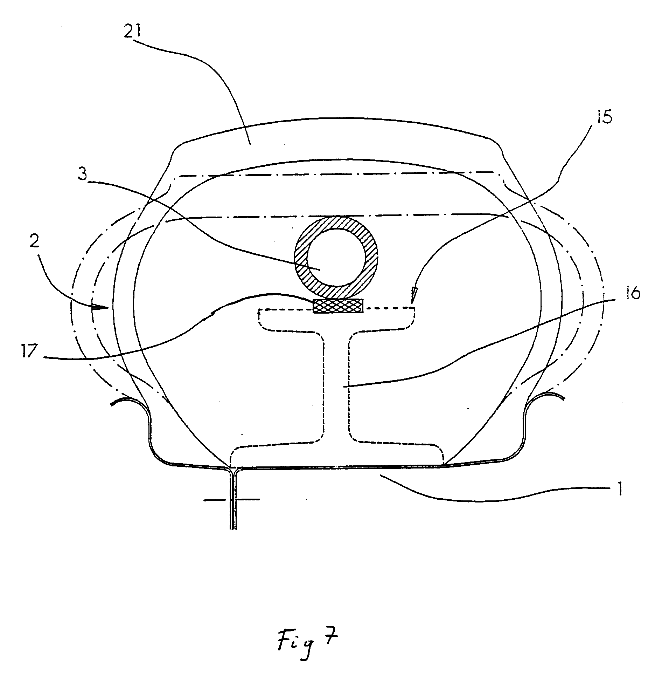

A titre d'exemple, le système de dégonflage peut neutraliser l'effet anti-retour dudit clapet anti-retour 4, laissant s'échapper l'air pour diminuer la pression de gonflage, selon l'ordre qu'il reçoit. On voit aux figures 2 à 6 un dispositif de dégonflage d'un pneumatique en rotation comportant un poussoir 7 traversant la jante 1 sur laquelle est monté ledit pneumatique 2, dont l'extrémité 7A (Fig. 4) du côté de l'intérieur du pneumatique commande l'ouverture de l'orifice 32 pour laisser s'échapper l'air contenu dans l'enceinte pneumatique, et dont l'extrémité opposée 7B est solidaire d'une came destinée à coopérer avec un presseur immobile en rotation pour provoquer le dégonflage.

Ainsi la commande du dégonflage se fait également depuis l'espace fixe. Ledit presseur est formé par un galet 6, rotatif autour de son axe 60. Ledit galet 6 est solidaire du porte-roue et donc, tout comme le galet 5, est immobile en rotation par rapport à l'espace fixe. Lorsque l'on veut dégonfler le pneumatique, le galet 6 appuie sur le poussoir 7 de dégonflage, ce qui provoque un déplacement équivalent du support 71 du pointeau 41 du clapet 4. Le pointeau 41 se soulève, démasque l'orifice 32 pour permettre le passage de l'air. Le poussoir 7 réalise donc une traversée étanche (grâce au joint 70) au travers de la jante 1 du positionnement radial 71 du pointeau 41.

Le ressort de rappel 8 maintient le clapet 4 appuyé contre l'orifice 32 en position de repos. Le même ressort 8 sert également de chemin de roulement pour que le poussoir 7 coopère avec le galet 6 servant de presseur lorsque l'on déplace radialement vers la jante le galet 6. Il constitue donc une came de commande du poussoir 7.

On voit donc que, lorsque le pneumatique 2 monté sur la jante 1 tourne, et que la position radiale du galet 6 est maintenue au niveau représenté à la figure 4, le clapet 4 est soulevé quelque peu à chaque tour, laissant ainsi s'échapper un peu d'air au travers du tuyau 3, pour diminuer la pression de gonflage. Pour la commande du galet 6, on peut par exemple prévoir que sa position de repos est sa position naturelle, et qu'il est déplacé radialement vers la jante par tout moyen approprié jusqu'à rouler en permanence sur la protubérance 12 formant butée radiale. On peut commander le gonflage et la dégonflage par des galets séparés, ayant chacun leur système de positionnement radial comme illustré, ceux-ci étant au besoin légèrement décalés circonférentiellement ; on peut également commander le gonflage et le dégonflage par le même galet ayant en plus un système de positionnement axial.

La présente invention permet donc de réaliser une roue active, c'est-à-dire une roue dont la pression de gonflage du pneumatique est un paramètre que l'on maîtrise, sans devoir transmettre une commande (électrique, hydraulique ou pneumatique) dans l'espace mobile en rotation pour faire varier cette pression de gonflage.

La suite illustre une autre application de l'invention où c'est le pneumatique lui-même qui supplée quelque peu à une fuite d'air.

La figure 7 schématise une variante de l'invention où les moyens capables d'assurer la striction sont solidaires de la bande de roulement 21 du pneumatique 2. Il s'agit ici de la face intérieure de la bande de roulement 21 qui, en cas de dégonflement comme suggéré par les traits discontinus, appuie directement sur le tuyau souple 3 fixé, au moins en partie, sur la périphérie radialement extérieure 15 d'un élément 16 de la jante 1. La face intérieure de la bande de roulement 21 constitue en effet un moyen immobile en rotation dans sa partie déformée par le contact avec la route. L'affaissement de la bande de roulement 21 constitue un moyen équivalent au rapprochement du galet 5.

Le tuyau souple 3 est donc fixé à l'intérieur même du volume intérieur 20 du pneumatique 2. Bien sûr, du côté de l'orifice d'aspiration, le tuyau traverse la jante pour rejoindre l'extérieur du pneumatique.

Par élément 16 de la jante 1, il faut entendre soit un appui interne rapporté, destiné à supporter la charge lorsque le pneumatique 2 est dégonflé, comme représenté à la figure 7, soit une partie de jante elle-même, conçue dans ce but, comme par exemple la zone médiane d'une jante pour pneumatique à accrochage inversé du genre illustré par la demande de brevet DE-A-3 019 742. Grâce à ce dispositif de gonflage, il est possible de rendre plus de souplesse à l'appui pour roulage de secours par une pression de gonflage modéré mais non nulle. Il est également possible d'insérer, entre l'appui rigide (périphérie extérieure 15) et le tuyau souple 3, une pièce d'écartement 17, par exemple en caoutchouc plein, non susceptible de porter la charge, mais qui permette d'assurer la striction du tuyau 3 en coopération avec la bande de roulement 21 plus tôt lors de l'affaissement de celle-ci.

## Revendications

1. Dispositif pour le gonflage d'un pneumatique (2) en rotation, comportant un tuyau (3) souple disposé au moins en partie sensiblement circulairement et coaxialement au pneumatique (2), solidaire en rotation dudit pneumatique (2) et comportant au moins deux orifices (31, 32), l'un (32) des orifices (31, 32) étant raccordé au volume interne (20) du pneumatique via un clapet anti-retour (4), ledit dispositif comportant des moyens (5; 21) capables d'assurer localement la striction dudit tuyau souple (3) pour provoquer le gonflage, lesdits moyens (5; 21) étant immobiles en rotation, caractérisé en ce que l'autre (31) des orifices (31, 32) est en communication avec la pression atmosphérique et en ce que lesdits moyens (5; 21) capables d'assurer la striction sont susceptibles de prendre deux positions : une position de repos et une position active dans laquelle ils entrent en contact avec ledit tuyau (3) pour en provoquer la striction.

2. Dispositif selon la revendication 1, caractérisé en ce que ledit tuyau souple (3) est fixé, au moins en partie, sur la périphérie radialement intérieure (10) de la jante (1) sur laquelle est monté le pneumatique (2).

3. Dispositif selon l'une des revendications 1 ou 2, caractérisé en ce que lesdits moyens (5) sont constitués par un galet (5).

4. Dispositif selon la revendication 1, caractérisé en ce que lesdits moyens (21) sont solidaires de la bande de roulement (21) du pneumatique (2).

5. Dispositif selon la revendication 4, caractérisé en ce que ledit tuyau souple (3) est fixé, au moins en partie, sur la périphérie radialement extérieure (15) d'un élément (16) de la jante (1).

6. Dispositif selon l'une des revendications 1 à 5, caractérisé en ce qu'il comporte en outre un dispositif de dégonflage d'un pneumatique (2) en rotation, comportant un poussoir (7) traversant la jante (1) sur laquelle est monté ledit pneumatique (2), dont l'extrémité (7A) du côté de l'intérieur du pneumatique commande l'ouverture d'un orifice (32) pour laisser s'échapper l'air contenu dans l'enceinte pneumatique (20), et dont l'extrémité opposée (7B) est solidaire d'une came destinée à coopérer avec un presseur immobile en rotation pour provoquer le dégonflage.

7. Dispositif selon la revendication 6, caractérisé en ce que ladite came est constituée par une lame formant ressort (8) de rappel prenant appui sur la jante (1).

8. Dispositif selon la revendication 2 et selon l'une des revendications 6 ou 7, dans lequel ladite extrémité (7A) du côté de l'intérieur du pneumatique est solidaire du support (71) du pointeau (41) du clapet anti-retour (4), le déplacement du poussoir (7) provoquant le soulèvement dudit pointeau (41) pour laisser s'échapper l'air.

## Claims

1. Device for inflating a rotating tire (2) comprising a deformable hose (3) mounted for rotation with a tire (2), said hose being arranged at least in part substantially along an arc of a circle and coaxial with the tire (2), said hose having at least two open ends (31, 32), one (32) of which being in communication with the volume (20) inside the tire, via a one direction valve (4), said device comprising means (5, 21) for locally reducing the sectional area of the hose to cause inflation, said means (5, 21) being stationary relative to the rotation of the tire, characterized by the fact that said other end (31) is in communication with atmospheric pressure and by the fact that said means (5, 21) for locally reducing is able to take two positions : a rest position, and an active position in which it comes in contact with said hose (3) to reduce the sectional area.

2. Device according to claim 1, characterized by the fact that said hose (3) is at least partially fastened to a radially inside periphery (10) of the rim (1) on which the tire (2) is mounted.

3. Device according to claim 1 or 2 characterized by the fact that said means (5) for locally reducing comprise a presser roller (5).

4. Device according to claim 1, characterized by the fact that said means (21) for locally reducing is fixed to a tread of the tire.

5. Device according to claim 5, characterized by the fact that said hose (3) is fixed at least in part on the radially outer surface (15) of an element (16) of the rim (1).

6. Device according to one of the claims 1 to 5, characterized by the fact that it comprises a deflating device for a rotating tire, comprising a pusher (7) extending through said rim (1) on which the tire (2) is mounted, whose end (7A) communicating with the inside volume of the tire is able to open an orifice (32) to deflate the tire, and whose opposite end (7B) is connected to a cam and comprising a presser means mounted stationarily relative to the rotation of the tire for selectively engaging said cam to deflate the tire.

7. Device according to claim 6, characterized by the fact that said cam comprises a resilient blade forming a return spring (8) resting on the rim.

8. Device according to claim 2 and to one of the claims 6 or 7, wherein said end (7A) on the inside of the tire is connected to the support (71) for needle (41) of the one way valve (4), the movement of the pusher (7) causing the movement of the needle (41) to allow air to escape.

## Patentansprüche

1. Vorrichtung zum Füllen eines sich drehenden Luftreifens (2), die aufweist:
- Einen elastischen Schlauch (3), der mindestens teilweise etwa kreisförmig und koaxial zum Luftreifen (2) angeordnet ist, mit ihm fest verbunden ist und sich mit dem Luftreifen mitdreht und mindestens zwei Öffnungen (31, 32) aufweist, wobei eine Öffnung (32) der beiden Öffnungen (31, 32) über ein Rückschlagventil (4) mit dem Innenraum (20) des Luftreifens verbunden ist,
- und eine Einrichtung (5; 21), die dazu ausgelegt ist, den elastischen Schlauch (3) örtlich zu quetschen, um so ein Aufpumpen zu gewährleisten, und die sich mit dem Luftreifen mitdreht,
dadurch **gekennzeichnet,** daß
die andere Öffnung (31) der beiden Öffnungen (31, 32) mit dem Atmosphärendruck in Verbindung steht
und
die Einrichtung (5; 21), die dazu dient den Schlauch örtlich zu quetschen, zwei Stellungen einnehmen kann: Eine Ruhestellung sowie eine aktive Stellung, in der sie mit dem Schlauch (3) in Kontakt kommt, um so eine Quetschung dieses Schlauchs hervorzurufen.

2. Vorrichtung nach Anspruch 1,
dadurch gekennzeichnet, daß
der elastische Schlauch (3) zumindest zum Teil am radial inneren Umfang (10) der Felge (1) befestigt ist, auf welcher der Luftreifen (2) montiert ist.

3. Vorrichtung nach Anspruch 1 oder 2,
dadurch gekennzeichnet, daß
die Einrichtung (5) aus einer Andruckrolle besteht.

4. Vorrichtung nach Anspruch 1,
dadurch gekennzeichnet, daß
die Einrichtung (21) mit dem Laufstreifen (21) des Luftreifens (2) fest verbunden ist.

5. Vorrichtung nach Anspruch 4,
dadurch gekennzeichnet, daß
der elastische Schlauch (3) zumindest zum Teil am radial äußeren Umfang (15) eines Elements (16) der Felge (1) befestigt ist.

6. Vorrichtung nach einem der Ansprüche 1 bis 5,
dadurch gekennzeichnet, daß
sie ferner eine Abblasvorrichtung zum Ablassen von Druck aus einem sich drehenden Luftreifen (2) aufweist, die einen Stößel (7) aufweist, der durch die Felge (1), auf welcher der Luftreifen (2) montiert ist, hindurchgeht und dessen auf der Reifeninnenseite liegendes Ende (7A) die Freigabe einer Öffnung (32) steuert, um die in der Luftkammer (20) enthaltene Luft entweichen zu lassen, und dessen entgegengesetztes Ende (7B) mit einer Betätigungsnocke verbunden ist, die dazu dient, mit einer Preßeinrichtung zusammenzuwirken, die sich nicht mit dem Rad dreht, um das Luftablassen zu bewirken.

7. Vorrichtung nach Anspruch 6,
dadurch gekennzeichnet, daß
die Betätigungsnocke aus einer dünnen Platte besteht, die eine Rückstellfeder bildet, die an der Felge (1) zur Anlage kommt.

8. Vorrichtung nach Anspruch 2 sowie nach Anspruch 6 oder 7, bei welcher das auf der Reifeninnenseite liegende Ende (7A) fest mit dem Träger (71) des Ventilkegels (41) des Rückschlagventils (4) verbunden ist, wobei die Verschiebung des Stößels (7) das Anheben des Ventilkegels (41) hervorruft, um Luft entweichen zu lassen.
